# EUROPÄISCHE PATENTSCHRIFT

(11) **EP 2 376 260 B1**
(45) Veröffentlichungstag und Bekanntmachung des Hinweises auf die Patenterteilung: **25.04.2018**
(21) Anmeldenummer: 10701336.9
(22) Anmeldetag: 08.01.2010
(51) Int. Cl.: B25J 9/10

(54) **ÜBERTRAGUNGSMECHANISMUS**
TRANSMISSION MECHANISM
MÉCANISME DE TRANSMISSION

(30) Priorität: 15.01.2009 DE 102009000261
(43) Veröffentlichungstag der Anmeldung: 19.10.2011
(73) Patentinhaber: avateramedical Mechatronics GmbH, 98693 Ilmenau (DE)
(72) Erfinder: KARGUTH, Andreas, 99869 Tüttleben (DE); MOLLENHAUER, Olaf, 98693 Ilmenau (DE)
(74) Vertreter: Engel, Christoph Klaus
(86) Internationale Anmeldenummer: PCT/EP2010/050170
(87) Internationale Veröffentlichungsnummer: WO 2010/081772

(56) Entgegenhaltungen:
- DE-A1- 10 255 950
- DE-A1-102006 016 958
- TETRA Gesellschaft für Sensorik, Robotik und Automation mbH: "BioRob, der klügere Roboter gibt nach"[Online] 5. Mai 2008 (2008-05-05), Seiten 1-18, XP002595279 Robotics Products Gefunden im Internet: URL:http://www.tetra-ilmenau.de/downloads/ TETRA%20BioRob%20Projektinfo%205_2008.24.p df> [gefunden am 2010-08-04]
- FILIPPINI R ET AL: "A Comparative Dependability Analysis of Antagonistic Actuation Arrangements for Enhanced Robotic Safety" 2007 IEEE INTERNATIONAL CONFERENCE ON ROBOTICS AND AUTOMATION - 10-14 APRIL 2007 - ROMA, ITALY, IEEE, PISCATAWAY, NJ, USA, 10. April 2007 (2007-04-10), Seiten 4349-4354, XP031389474 ISBN: 978-1-4244-0601-2

## Beschreibung

Die Erfindung betrifft einen antagonistisch arbeitenden Übertragungsmechanismus, der mindestens in zwei Bewegungsrichtungen verstellbar ist. Der Übertragungsmechanismus umfasst mindestens ein zur Kraftübertragung zwischen einer Antriebsrolle und einer Abtriebsrolle wirkendes Zugmittel, welches in der Kraftübertragungsstrecke eine Federkopplung aufweist.

Derartige Übertragungsmechanismen werden in Anwendungsbereichen der Automatisierung und Robotik eingesetzt. Dabei sind neben der geringen Masse der Übertragungsmechanismen auch die Schnelligkeit und Stärke der Kraftübertragung von Bedeutung. Insbesondere für Positionierungsaufgaben ist eine hohe Präzision des Abtriebs solcher Mechanismen wichtig. Die Konzipierung und die Entwicklung von Leichtbau-Bewegungsmechanismen werden dabei häufig durch die Struktur und den Aufbau von biologischen Bewegungsmechanismen inspiriert.

DE 689 21 623 T2 offenbart ein Verstellorgan mit einer aufblasbaren Kammer und einer zugfesten Faser. Der Antrieb erfolgt allerdings nicht über einen Seilzug sondern durch Aufpumpen bzw. Entleeren eines Kammernbauteils. Dabei erstreckt sich die Faser entlang einer Wand des Kammerbauteils und ist in diese eingebettet, während eine weitere Wand des Kammerbauteils im Wesentlichen undehnbar ist. Bei einer Ausdehnung des Kammerbauteils verringert sich die kombinierte Länge des Kammerbauteils und des Verbindungsgliedes.

Aus der DE 197 19 931 A1 ist eine Einrichtung zum Kompensieren von Schwingungen in einem Schwenkarm eines Roboters bekannt, wobei auftretende Schwingungen mittels Spannfedern, einer Messeinrichtung und durch Erzeugung gesteuerter Gegenkräfte des Schwenkantriebs gedämpft werden.

In der Leichtbaukonstruktion werden zur Bewegungs- und Kraftübertragung über größere Entfernungen antagonistisch arbeitende Zugmittelgetriebe eingesetzt. Ein Nachteil beim Einsatz von elastischen Zugmitteln ist, dass es bei Spannung des Lasttrums (Seite des Seiles, die gezogen wird und stramm ist) zum Durchhängen des Leertrums (nicht gezogene Seite des Seils) kommt. Dies hat zu Folge, dass bei Lastwechsel das Durchhängen des Trums zu erheblichen Störungen, insbesondere hinsichtlich der Positionierungsgenauigkeit und -geschwindigkeit führen kann. Ein weiterer Nachteil von elastischen Zugmitteln ist, dass beim Einbau von Zugfedern in die Übertragungsmechanismen die übertragbare Kraft begrenzt ist.

Die DE 10 2006 016 958 A1 zeigt eine antagonistische Schwenkvorrichtung, insbesondere zum Bewegen von Roboterhand-Elementen mit einem über eine Schwenkachse schwenkbarem Gelenkelement. Mit dem Gelenkelement sind zwei Kraftübertragungseinrichtungen verbunden, welche jeweils mit einer Antriebseinrichtung verbunden sind. Als Kraftübertragungseinrichtung kann jeweils ein in sich geschlossener Seilzug verwendet werden, der das Gelenkelement umschlingt und zu einer Antriebswelle geführt ist und über eine Umlenkung zum Gelenkelement zurückgeführt ist. In die Kraftübertragungseinrichtungen ist jeweils eine Steifigkeits-Einstelleinrichtung, insbesondere ein elastischer Körper mit nichtlinearer Kennlinie integriert.
Dadurch, dass bei der gezeigten Vorrichtung zwei Antriebseinheiten Verwendung finden, ist die Konstruktion verhältnismäßig aufwendig und der durch die zwei Antriebe resultierende Masseneinsatz entsprechend groß. Ähnliche Anordnungen beschreiben R. Filippini u. a. im Artikel "A Comparative Dependability Analysis of Antagonistic Actuation Arrangements for Enhanced Robotic Safety" IEEE, Piscataway, NJ, USA, 10.04.2007 S. 4349-4354, XP031389474, ISBN: 978-1-4244-0601-2.
Der Erfindung liegt die Aufgabe zugrunde, einen verbesserten Übertragungsmechanismus für Antriebe bereitzustellen, der die Nachteile bekannter Zugmittelgetriebe vermeidet Insbesondere sollen eine Vergrößerung der übertragbaren Kräfte sowie eine Steigerung der Positioniergenauigkeit ermöglicht werden. Schließlich wird eine gesteigerte Funktionssicherheit angestrebt, welche auch der Vermeidung von Gefährdungen bei möglichen Kollisionen mit einem abtriebsseitig angekoppelten mechanischen Glied dient. Der Übertragungsmechanismus sollte sich weiterhin durch eine vereinfachte Konstruktion auszeichnen. Erfindungsgemäß wird die Aufgabe durch einen Übertragungsmechanismus für ein in zwei Richtungen wirkendes Antriebssystem mit den Merkmalen des Anspruchs 1 gelöst. Der erfindungsgemäße Übertragungsmechanismus ermöglicht bei Einprägung einer Kraft deren Übertragung und dadurch die Bewegung eines Abtriebsgliedes in mindestens zwei Bewegungsrichtungen. Der erfindungsgemäße Übertragungsmechanismus kann Teil eines Antriebssystems eines Roboterarms sein. Dieses Antriebssystem besteht aus einem Motor, einer Antriebsrolle und einer Abtriebsrolle sowie einem seilförmigen Zugmittel, welches zur Kraftübertragung zwischen der Antriebsrolle und der Abtriebsrolle verläuft. Die Kraftübertragungsstrecke zwischen der Antriebs- und der Abtriebsrolle weist erfindungsgemäß eine Federkopplung auf, die eine nichtlineare Kraft-Weg-Kennlinie beschreibt.
Ein Vorteil der nichtlinearen Kraft-Weg-Kennlinie der Federkopplung ist die Unterstützung der Selbststabilisierung der Bewegung. Während der Bewegung des Arbeitsarms von einer Ausgangsposition in eine Zielposition erfolgt nämlich eine aktive Schwingungskompensation, die es ermöglicht, dass der Arm in der Zielposition schnell zur Ruhe kommt.
Zwischen der Antriebsrolle und der Abtriebsrolle verlaufen zwei Trume des Zugmittels, in die jeweils eine Federkopplung eingeschaltet ist. Dabei wird der Trum als Abschnitt eines seilförmigen Zugmittels verstanden, der frei und nicht aufliegend ist.
In abgewandelten Ausführungsformen kann der Trum eines Zugmittels auch mehrere Federkopplungen aufweisen. Dabei können alle oder nur eine der Federkopplungen eine nichtlineare Kraft-Weg-Kennlinie besitzen, die aber unterschiedlich in ihren Charakteristiken sind.
Des Weiteren ist es von Vorteil, wenn die Federkopplung so positioniert wird, dass beim Aufrollen eines seilförmigen Zugmittels auf die Antriebsrolle die Federkopplung vorzugsweise vollständig oder auch nur teilweise noch im Trum liegt, um somit unter allen Antriebsbedingungen die durch die Federkopplung bedingten Eigenschaften der Kraftübertragungsstrecke nicht ungewollt zu verändern.

Die erfindungsgemäß zu verwendende Federkopplung umfasst zur Bereitstellung der nichtlinearen Kraft-Weg-Kennlinie zwei Federelemente. Dabei ist das erste Federelement eine herkömmliche Feder, beispielsweise eine Zugfeder, und das zweite Federelement ist ein Federelement mit ansteigender Federkonstante, beispielsweise ein Elastomerband. Beide Federelemente sind in der Kraftübertragungsstrecke parallel geschaltet.
In einer zweckmäßigen Ausführungsform ist das zweite Federelement längs zur Federachse des ersten Federelements angeordnet und verläuft beispielsweise im zylindrischen Hohlraum der Zugfeder. Dabei sind die Enden der Federelemente miteinander verknüpft. Die beiden verknüpften Enden sind jeweils mit dem seilförmigen Zugmittel verbunden.

Die Kraftübertragung zwischen Antriebsrolle und Abtriebsrolle wird mittels des Zugmittels realisiert, welches ein Seil ist, bestehend aus Kunststofffasern, die eine hohe Risssicherheit und Abriebsfestigkeit besitzen (z.B. Polyethylenfasern). Der Vorteil liegt darin, dass Zugmittelgetriebe, die mit so einem hoch flexiblen aber nicht elastischen seilförmigen Zugmittel ausgestattet sind, in Anwendungsbereichen einsetzbar sind, die für Menschen gefährlich oder unzugänglich sind. In einem Anwendungsbereich, in dem z.B. ein extrem tiefer Temperaturbereich von ca. -130°C bis -195°C (Kryobereich) aufrecht erhalten werden muss, ist es von großer Bedeutung, dass die Antriebsmechanismen betriebsfähig bleiben und keinem überhöhten Verschleiß unterliegen.

Das Zugmittel kann alternativ auch ein Zahnriemen, ein Transmissionsriemen, eine Kette, ein Metallseil, eine Stange oder dergleichen sein.

Die Antriebs- und Abtriebsrollen können als Seilrollen, Wellen, Scheiben oder dergleichen ausgebildet sein. Im einfachsten Fall sind die Rollen an zentralen Drehachsen gelagert, die an einem Gestell befestigt sind. Die Lagerung kann aber auch gezielt exzentrisch erfolgen, um das wirksame Übersetzungsverhältnis zwischen den Rollen während der Drehung zu verändern. Eine Veränderung im Übertragungsverhalten lässt sich beispielsweise auch durch Verschiebung des Kraftanlenkpunktes, an welchem das Zugmittel an der jeweiligen Rolle angreift, relativ zur Drehachse der jeweiligen Rolle erreichen.

Eine abgewandelte Ausführungsform des antagonistischen Übertragungsmechanismus weist zwei seilförmige Zugmittel auf, wobei jedes Zugmittel jeweils mit der An- und Abtriebsrolle fest verbunden ist.

In einer nochmals abgewandelten Ausführungsform sind die Enden des seilförmigen Zugmittels nur mit der Antriebsrolle fest verbunden. Dabei übernimmt die Abtriebsrolle die Führung des Zugmittels, die hier als eine Umlenkrolle ausgestaltet ist.

Zum Aufbau einer Robotereinheit oder dergleichen lassen sich mehrere erfindungsgemäße Antriebssysteme kaskadieren. Dabei können Seilzugmittel über mehrere Umlenkrollen geführt werden, sodass der motorische Antrieb relativ weit entfernt vom eigentlichen Arbeitselement, beispielsweise einem Greifer, angeordnet werden kann.

Die konstruktive Verbindung von Federkopplung und Zugmittel ermöglicht eine größere Momentenübertragung am Abtrieb des Antriebssystems. Dabei sind die einzelnen Federmechanismen einer ggf. aufgebauten Kaskade so ausgelegt, dass beim Erreichen der maximalen vorgegebenen Auslenkung ein "weicher" Anschlag möglich ist. Die Dimensionierung der Federn ist so gestaltet, dass diese nur im elastischen Bereich wirken. Der Einsatz der aneinander geschalteten Federmechanismen erzeugt eine nichtlineare Federkennlinie für die Momentenübertragung am Abtrieb. Von Vorteil ist die Möglichkeit der definierten Kraft- beziehungsweise Momenterzeugung am Abtrieb oder am Wirkelement.

Die Kraft-Weg-Kennlinie kann je nach der Zusammenstellung der aneinander geschalteten Federmechanismen auf die jeweilige Anwendung abgestimmt werden. Dabei kann diese Abstimmung auch einen nicht symmetrischen Kennlinienverlauf bewirken, woraus Kennlinienunterschiede bei einer Hin- und Herbewegung resultieren.

In einer weiteren vorteilhaften Ausführungsform kann durch statische oder dynamische Vorbelastungen auf den Trum, die beispielsweise durch Zuschaltung einer weiteren Rolle oder eines Elektromagneten erreichbar sind, der Nullpunkt der Kraft-Weg-Kennlinie verschoben werden.

In einer besonders bevorzugten Ausführungsform der Erfindung ist das den Übertragungsmechanismus tragende Gestell gleichzeitig als Arbeitsarm/Schwenkarm gebildet, welcher an einem Ende gelenkbeweglich angebracht ist und einen erfindungsgemäßen Übertragungsmechanismus aufweist. Durch serielle oder parallele Verkopplung von n-Antrieben können komplexe Bewegungsmechanismen in einem n-dimensionalen Raum realisiert werden, wie beispielsweise bei einem Bewegungsautomaten. Durch das Zuschalten weiterer Antriebssysteme kann Einfluss auf den Verlauf der Federkennlinienausprägung am Abtrieb genommen werden. Ein Vorteil der Elastizität zwischen Antriebsrolle und Abtriebsrolle ist auch bei einem solchen komplexen System die passive Nachgiebigkeit, die bei einer eventuellen Kollision auftritt, sowie die Schonung der mechanischen Komponenten bei stoßartigen Rückwirkungen. Dadurch wird eine hohe passive Sicherheit des Arbeitsarms erreicht, ohne zusätzliche Sensorik zu benutzen. Des Weiteren ermöglicht die sich aus dem Antriebssystem ergebende wechselseitige Verspannung der Roboterglieder eine extreme Leichtbaukonstruktion nach dem Endoskelett-Prinzip, die eine deutliche Reduzierung des Energieverbrauchs mit sich bringt.

Um eine hohe Positioniergenauigkeit zu unterstützen, weist mindestens die Abtriebsrolle einen Sensor auf, der zur Erfassung der Position bzw. der Bewegung am Abtrieb dient. Mittels eines faseroptischen Encoders, der aus einer Taktscheibe und einer Lichtleiteranordnung besteht, wird eine hohe Winkelauflösung ermöglicht, die zur Ermittlung von Winkelposition und Winkelgeschwindigkeit des Schwenkarms benötigt werden. Der Sensor weist neben der Winkelerfassung vorzugsweise eine separate Einheit zur Nullpunkterkennung auf. Diese faseroptischen Encodersysteme haben den Vorteil, dass ihre Funktion auch im oben erwähnten Kryobereich erhalten bleibt.

In einer bevorzugten Anwendungsform ist die Abtriebsrolle mit einem Gelenk zur Bewegung des Schwenkarms gekoppelt. Dabei ist es von Vorteil, den Sensor im Gelenk des Arbeitsarms zu integrieren.

Um eine schwingungsfreie Armbewegung zu regeln, ist es von Vorteil, wenn die Antriebsrolle einen weiteren Sensor aufweist, der die Bewegungszustände des Arbeitsarms für den Ausregelungsprozess ermittelt und regelt. Werden die Sensorsignale von An- und Abtriebsrolle miteinander verknüpft, lassen sich besonders hohe Genauigkeiten bei der Positionierung erreichen.

Besonders bevorzugte Ausführungsformen der Erfindung sind in den Figuren dargestellt und werden nachfolgend näher erläutert. Es zeigen:
- Fig. 1:: eine schematische Darstellung einer ersten Ausführungsform eines erfindungsgemäßen Übertragungsmechanismus mit zwei Federkopplungen mit nichtlinearer Kraft-Weg-Kennlinie;
- Fig. 2:: eine schematische Darstellung einer zweiten Ausführungsform des Übertragungsmechanismus mit einer Möglichkeit zur Kennlinienverschiebung;
- Fig. 3:: eine schematische Darstellung einer dritten Ausführungsform des Übertragungsmechanismus mit einer linearen Feder und einer nichtlinearen Federkopplung;
- Fig. 4:: eine schematische Darstellung einer vierten Ausführungsform des Übertragungsmechanismus mit einem gegen ein Festlager gespannten Trum;
- Fig. 5:: eine schematische Darstellung der Federkopplung mit nichtlinearer Kraft-Weg-Kennlinie;
- Fig. 6: typische Verläufe von Kraft-Weg- bzw. Moment-Drehwinkel-Kennlinien, wie sie sich aufgrund der Verwendung der nichtlinearen Federkopplung ergeben;
- Fig. 7:: ein Ausführungsbeispiel eines Arbeitsarms mit mehreren kaskadierten Antriebssystemen in einer Seitenansicht.

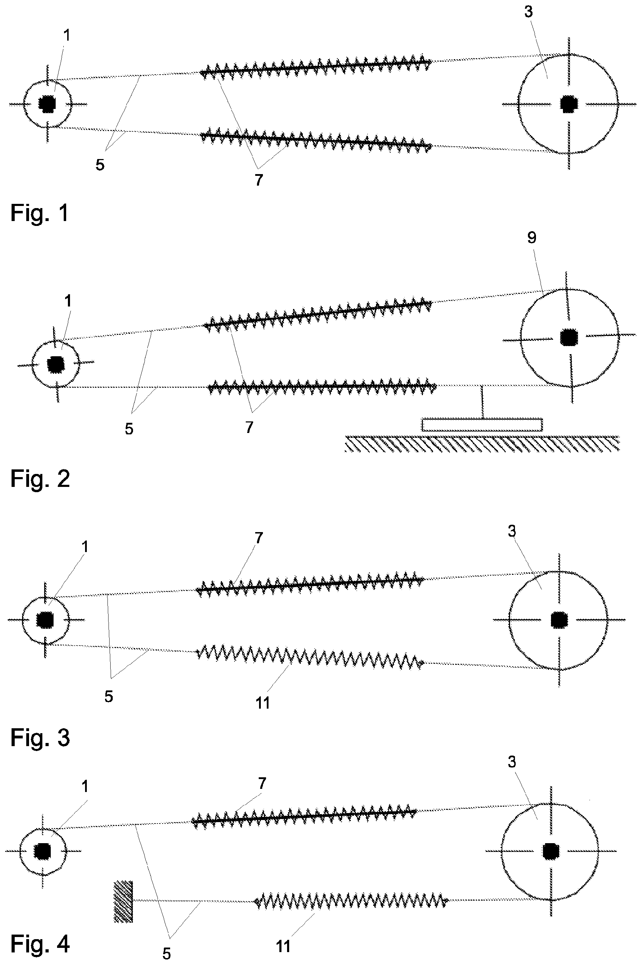

In Fig. 1 ist eine erste Ausführungsform eines erfindungsgemäßen Übertragungsmechanismus schematisch dargestellt. Der Übertragungsmechanismus besitzt eine Antriebsrolle 01 und eine Abtriebsrolle 03, die beide mit ihren Drehachsen an einem Gestell (nicht dargestellt) gelagert sind. Zur Kraftübertragung zwischen der Antriebsrolle 01 und der Abtriebsrolle 03 verlaufen zwei antagonistisch arbeitende seilförmige Zugmittel 05. Bei der hier dargestellten Ausführungsform sind die Enden der seilförmigen Zugmittel 05 jeweils mit der Abtriebsrolle 03 und der Antriebsrolle 01 fest verbunden. Wird die Antriebsrolle 01 in Drehung versetzt, wird entsprechend der durch die Zugmittel 05 bewirkten mechanischen Kopplung auch die Abtriebsrolle 03 in eine Drehung versetzt. Ein an die Abtriebsrolle 03 oder das Zugmittel 05 angekoppeltes mechanisches Glied (nicht dargestellt) wird somit ebenfalls in eine Bewegung (Abtriebsbewegung) versetzt. Wird die Antriebsrolle in entgegen gesetzter Richtung gedreht, erfolgt die Abtriebsbewegung entsprechend entgegengesetzt. Je nach mechanischer Führung des Abtriebsgliedes verfolgt das angekoppelte mechanische Glied eine feste Bewegungsbahn in zwei entgegengesetzte Richtungen.

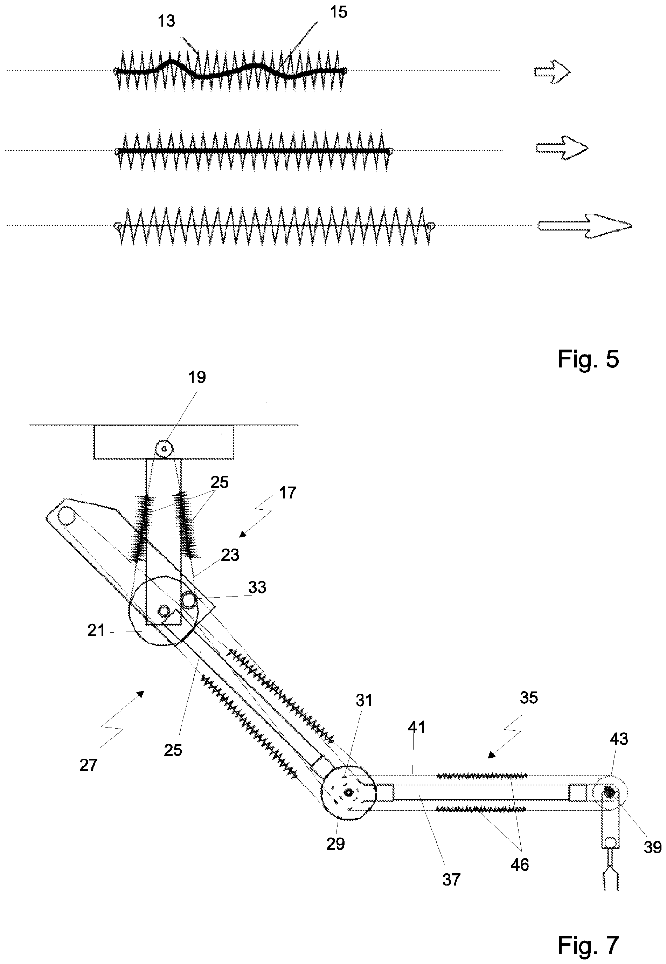

Bei der in Fig. 1 dargestellten Ausführung ist in jedem Trum eine Federkopplung 07 eingesetzt. Die Federkopplung 07 bildet mit dem seilförmigen Zugmittel 05 eine Kraftübertragungsstrecke, welche eine nichtlineare Kraft-Weg-Kennlinie am Abtrieb hervorruft. Die nichtlineare Kennlinie ergibt sich aufgrund des Aufbaus der Federkopplung, welche beispielhaft in Bezug auf Fig. 5 weiter unten beschrieben wird. An der Abtriebsrolle 03 kann ein Moment abgegriffen werden, welches je nach Drehrichtung der Antriebsrolle 01 in zwei Richtungen einer Bewegungsbahn wirkt.

In Fig. 2 ist eine zweite Ausführungsform des Antriebssystems dargestellt, welche die wesentlichen Elemente der vorhergehenden Ausführungsform besitzt. Eine Besonderheit dieser Ausführungsform besteht darin, dass ein Vorspannmittel 09 vorgesehen ist, mit welchem die Vorspannung der Federkopplungen 07 einstellbar ist. Durch beispielsweise eine lineare Verlagerung des Vorspannmittels 09 werden die Federn der Federkopplungen 07 mehr oder weniger stark vorgespannt. Dadurch lässt sich die Kennlinie der Kraftübertragungsstrecke relativ zum relevanten Weg (Bewegungsstrecke des Trums) verschieben.

In Fig. 3 ist eine dritte Ausführungsform des Übertragungsmechanismus dargestellt, welche die wesentlichen Elemente der Ausführungsform aus Fig.1 besitzt. Der Unterschied zu Fig. 1 ist, dass das antagonistisch arbeitende seilförmige Zugmittel 05 nur in einem Trum eine Federkopplung 07 besitzt. Im zweiten Trum ist eine herkömmliche Zugfeder 11 mit linearer Kraft-Weg-Kennlinie eingesetzt. Die nichtlineare Kraft-Weg-Kennlinie des Übertragungsmechanismus ist daher nur wirksam, wenn der die Federkopplung 07 enthaltende Zugmittelabschnitt als Lasttrum arbeitet. Bei einer nochmals abgewandelten Ausführungsform kann auf die Zugfeder 11 auch gänzlich verzichtet werden. In all diesen Bauvarianten stehen die durch die Erfindung bewirkten Vorteile nur in einer Drehrichtung der Abtriebsrolle zur Verfügung.

In Fig. 4 ist eine vierte Ausführungsform des Übertragungsmechanismus dargestellt, welche die wesentlichen Elemente der Ausführungsform aus Fig.3 aufweist. Der Unterschied zu Fig. 3 ist, dass das eine Ende des seilförmigen Zugmittels 05 mit der Antriebsrolle 01 fest verbunden ist und das zweite Ende mit einem Festlager 12, beispielsweise einem Gehäuse oder Gestell verbunden ist. Das an der Abtriebsrolle 03 abgreifbare Lastmoment besitzt auch in diesem Fall nur in einer Richtung der Bewegungsbahn einen nichtlineare Kraft-Weg-Kennlinie, da die Federkopplung 07 mit nichtlinearer Federkonstante nur in einem der an die Abtriebsrolle angreifenden Zugmittelabschnitte eingesetzt ist. Abstrakt betrachtet könnte auf den Zugmittelabschnitt zwischen Abtriebsrolle 03 und Festlager 12 ganz verzichtet werden. Die Zugfeder 11 dient dann lediglich der Rückstellung der Abtriebsrolle, wenn über das Zugmittel 05 und die Federkopplung 07 keine Zugkraft von der Antriebsrolle 01 aufgebracht wird. Der erfindungsgemäße Übertragungsmechanismus ist dennoch realisiert, wenn auch nur in einer Bewegungsrichtung wirksam.

Fig. 5 zeigt eine schematische Detaildarstellung der Federkopplung 07, die in das seilförmige Zugmittel 05 eingesetzt ist, in drei Bewegungsphasen. Die Federkopplung 07 ist in dem Trum des seilförmigen Zugmittels 05 eingeschaltet und umfasst zwei Federelemente. Ein erstes Federelement 13 ist beispielsweise eine herkömmliche Zugfeder, in deren Seele ein zweites Federelement 15 verläuft. Dabei sind die Enden der beiden Federelemente miteinander verknüpft. Das zweite Federelement 15 besitzt eine mit steigender Längsdehnung ansteigende Federkonstante und ist beispielsweise ein Elastomerband. In dem in Abb. a) gezeigten Zustand wirkt auf die Federkopplung 07 nur eine kleine Zugkraft, wobei das Elastomerband 15 locker in der nur wenig gespannten Zugfeder 13 liegt. Die Federkopplung arbeitet in dieser Bewegungsphase wie eine herkömmliche Zugfeder mit linearer Kennlinie. Wird eine größere Kraft ausgeübt, bewirkt dies eine stärkere Streckung der Zugfeder 13. Gleichzeitig wird das Elastomerband 15 in der Zugfeder 13 zunächst gestrafft. Mit zunehmender Kraft beginnt eine elastische Dehnung des Elastomerbandes 15 bei weiterer Dehnung der Zugfeder 13, wie es in Abb. b) gezeigt ist. Das Elastomerband 15 ist so konfiguriert, dass es beim Erreichen einer maximalen vorgegebenen Dehnung in einen nicht-elastischen Bereich eintritt, bevor es zu einer Überdehnung der Zugfeder 13 kommt. Dieser Zustand ist in Abb. c) dargestellt. Hier wirkt das Elastomerband 15 wie ein nicht-elastisches Seil, sodass große Zugkräfte im Wesentlichen verzögerungsfrei von der Antriebsrolle an die Abtriebsrolle übertragen werden können.

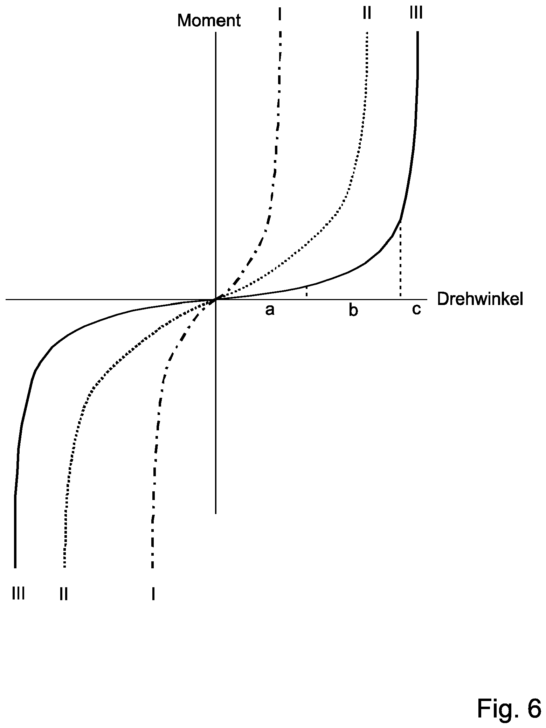

In Fig. 6 sind typische Verläufe von Kraft-Weg- bzw. Moment-Drehwinkel-Kennlinien gezeigt, wie sie sich aufgrund der Verwendung der beschriebenen Federkopplung 07 ergeben. Die Kennlinien I, II und III symbolisieren unterschiedliche Federkopplungen. Wie oben erläutert, ist durch konstruktive Maßnahmen die Einstellung der Kennlinie möglich, sowohl in Bezug auf die Steigung als auch hinsichtlich der Nullpunktlage. An der Kennlinie III sind außerdem drei Abschnitte a, b und c markiert, welche im Wesentlichen den drei Phasen im Bewegungsablauf entsprechen, wie sie im Zusammenhang mit Fig. 5 beschrieben wurden.

In Fig. 7 ist ein Ausführungsbeispiel eines mehrteiligen Arbeitsarms mit mehreren Antriebssystemen unter Verwendung des erfindungsgemäßen Übertragungsmechanismus in einer vereinfachten Seitenansicht dargestellt. Der mehrteilige Arbeitsarm, vorzugsweise ein Roboterarm, weist eine Knickarmstruktur mit vier elastisch verkoppelten Gelenken für Säule, Schulter, Ellenbogen und Handneigung auf, sodass ein Freiheitsgrad F=4 realisierbar ist. Ein herkömmlicher Antrieb (nicht gezeigt) ermöglicht die Drehung einer Säule 16. Ein erstes erfindungsgemäß gestaltetes Antriebssystem 17 befindet sich an der Basis des Roboterarms und umfasst eine motorisch angetriebene erste Antriebsrolle 01a, eine drehbar gelagerte erste Abtriebsrolle 03a und ein antagonistisch arbeitendes erstes seilförmiges Zugmittel 05a, in welches je Kraftübertragungsstrecke Federkopplungen 07a eingeschaltet sind. Die erste Abtriebsrolle 03a trägt einen ersten gelenkbeweglichen Schwenkarm 25, welcher über den ersten Übertragungsmechanismus 17 zu einer Schwenkbewegung angetrieben wird.

Der erste Schwenkarm 25 trägt einen zweiten erfindungsgemäß ausgebildeten Übertragungsmechanismus 27 mit einer zweiten Antriebsrolle 01b, einer zweiten Abtriebsrolle 03b, einem zweiten Seilzug 05b und darin eingesetzten zweiten Federkopplungen 07b. Die zweite Antriebsrolle 01b ist an einer Tragplatte 28 gelagert. Die zweite Abtriebsrolle 03b bildet ein drittes Gelenk, an welchem ein zweiter Schwenkarm 37 schwenkbeweglich gelagert ist.

Die Tragplatte 28 trägt weiterhin eine dritte Antriebsrolle 01c, die zu einem dritten erfindungsgemäßen Übertragungsmechanismus 35 gehört. Die dritte Antriebsrolle 01c treibt über einen herkömmlichen Seilzug 36 eine Umlenkrolle 31 an, die am Schwenklager des zweiten Schwenkarms 37 angeordnet ist. Ausgehend von der Umlenkrolle 31 verläuft ein drittes antagonistisch arbeitendes seilförmiges Zugmittel 05c mit eingesetzten dritten Federkopplungen 07c bis zu einer dritten Abtriebsrolle 03c. Der zweite Schwenkarm 37 trägt an seinem Ende die dritte Abtriebsrolle 03c, die ein viertes Gelenk 39 antreibt.

Für den Fachmann ist leicht erkennbar, dass mit dem erfindungsgemäßen Übertragungsmechanismus unterschiedlichste Positionieraufgaben realisierbar sind.

### Bezugszeichenliste

- 01: Antriebsrolle
- 03: Abtriebsrolle
- 05: elastischer Zugmittel
- 07: Federkopplung
- 09: Vorspannmittel
- 11: Zugfeder
- 12: Festlager
- 13: erstes Federelement der Federkopplung (Zugfeder)
- 15: zweites Federelement der der Federkopplung (Elastomerband)
- 16: Säule
- 17: erster Übertragungsmechanismus
- 25: erster Schwenkarm
- 27: zweiter Übertragungsmechanismus
- 31: Umlenkrolle
- 35: dritter Übertragungsmechanismus
- 36: herkömmlicher Seilzug
- 37: zweiter Schwenkarm
- 39: viertes Gelenk

## Patentansprüche

1. Übertragungsmechanismus für ein in zwei Richtungen wirkendes Antriebssystem eines Roboterarms mit mindestens einem seilförmigen Zugmittel (05), welches zur Kraftübertragung zwischen einer Antriebsrolle (01) und einer Abtriebsrolle (03) verläuft und welches zwei Trume aufweist, mit einem die Antriebsrolle (01) und die Abtriebsrolle (03) tragenden Gestell, und mit einer Federkopplung (07), die in einem der beiden Trume eingeschaltet ist und eine nichtlineare Kraft-Weg-Kennlinie besitzt, **dadurch gekennzeichnet, dass**
- die Federkopplung (07) in dem Lasttrum des seilförmigen Zugmittels (05) eine Vorspannung aufweist, die unter allen Lastzuständen eine Mindestspannkraft in dem Leertrum bewirkt,
- die Federkopplung (07) ein erstes Federelement (13) mit einer im Arbeitsbereich unveränderlichen Federkonstanten und ein zweites Federelement (15) mit einer mit steigender Längsdehnung ansteigenden Federkonstanten aufweist, wobei die Enden der beiden Federelemente (13, 15) miteinander verknüpft sind,
- das zweite Federelement (15) so konfiguriert ist, dass es beim Erreichen einer maximalen vorgegebenen Dehnung in einen nicht-elastischen Bereich eintritt, bevor es zu einer Überdehnung des ersten Federelements (13) kommt,
- das seilförmige Zugmittel (05) eine weitere Zugfeder (11) mit einer linearen Kraft-Weg-Kennlinie in dem anderen der beiden Trume aufweist, so dass die nichtlineare Kraft-Weg-Kennlinie der Federkopplung nur wirksam ist, wenn der die Federkopplung (07) enthaltene Trum als Lasttrum arbeitet.

2. Übertragungsmechanismus nach Anspruch 1, **dadurch gekennzeichnet, dass** zwischen der Antriebsrolle (01) und der Abtriebsrolle (03) zwei antagonistisch arbeitende Zugmittel (05) verlaufen, wobei in mindestens eines der beiden Zugmittel, vorzugsweise jedoch in beide, jeweils eine Federkopplung (07) mit nichtlinearer Kraft-Weg-Kennlinie eingeschaltet ist.

3. Übertragungsmechanismus nach Anspruch 1 oder 2, **dadurch gekennzeichnet, dass** zwischen der Antriebsrolle (01) und der Abtriebsrolle (03) zwei Zugmittelabschnitte (05) verlaufen, wobei jeder der Zugmittelabschnitte (05) an seinen Enden mit der Abtriebsrolle (01) bzw. der Antriebsrolle (03) fest verbunden ist.

4. Übertragungsmechanismus nach Anspruch 1 oder 2, **dadurch gekennzeichnet, dass** zwischen der Antriebsrolle (01) und der Abtriebsrolle (03) ein seilförmiges Zugmittel (05) verläuft, welches um die Abtriebsrolle (03) verläuft und dessen Enden mit der Antriebsrolle (01) fest verbunden sind.

5. Übertragungsmechanismus nach einem der Ansprüche 1 bis 4, **dadurch gekennzeichnet, dass** an der Abtriebsrolle (03) oder an dem Zugmittel ein oder mehrere mechanisch bewegliche Abtriebsglieder angekoppelt sind.

6. Übertragungsmechanismus nach einem der Ansprüche 1 bis 5, **dadurch gekennzeichnet, dass** die nichtlineare Kraft-Weg-Kennlinie der Federkopplung (07) mithilfe von Einstellmitteln veränderlich ist.

7. Übertragungsmechanismus nach Anspruch 6, **dadurch gekennzeichnet, dass** die Vorspannung der Federkopplung durch eine variabel einprägbare Vorspannkraft einstellbar ist.

8. Übertragungsmechanismus nach einem der Ansprüche 1 bis 7, **dadurch gekennzeichnet, dass** die Lage der am Gestell angebrachten Antriebsrolle (01) und Abtriebsrolle (03) zueinander veränderbar ist.

9. Übertragungsmechanismus nach einem der Ansprüche 1 bis 8, **dadurch gekennzeichnet, dass** die Antriebsrolle (01) und/oder die Abtriebsrolle (03) exzentrisch an ihrer jeweiligen, am Gestell befestigten Drehachse gelagert sind.

10. Übertragungsmechanismus nach einem der Ansprüche 1 bis 9, **dadurch gekennzeichnet, dass** der Radius zwischen dem Kraftanlenkpunkt, an welchem das Zugmittel (05) angreift, und der Drehachse der Antriebsrolle (01) und/oder der Abtriebsrolle (03) veränderbar ist.

11. Übertragungsmechanismus nach einem der Ansprüche 1 bis 10, **dadurch gekennzeichnet, dass** das Zugmittel (05) selbst aus nicht elastischem Material besteht.

## Claims

1. Transmission mechanism for a drive system of a robot arm, which acts in two directions with at least one rope-like traction means (05), which runs between a driving roller (01) and a driven roller (03) for force transmission, and which contains two strands, with a frame that supports the driving roller (01) and the driven roller (03), and with a spring coupling (07), which is inserted in one of the two strands and contains a non-linear load displacement curve, **characterized in that**
- the spring coupling (07) in the loaded strand of the rope-like traction means (05) has a pretension, which effects a minimum tensioning force in the return strand in all load conditions,
- the spring coupling (07) includes a first spring element (13) with an invariant spring constant in the operating range and a second spring element (15) with a spring constant which is increasing in the case of increasing longitudinal expansion, wherein the ends of both spring elements (13, 15) are linked with each other,
- the second spring element (15) is configured to enter a non-elastic range when reaching a maximum predetermined expansion, before an over-expansion of the first spring element (13) occurs,
- the rope-like traction means (05) contains a further tension spring (11) with a linear load displacement curve in the other one of the two strands, so that the non-linear load displacement curve of the spring coupling is effective only if the strand included in the spring coupling (07) operates as loaded strand.

2. Transmission mechanism according to claim 1, **characterized in that** two antagonistically operating traction means (05) run between the driving roller (01) and the driven roller (03), wherein a spring coupling (07) with a nonlinear load displacement curve is inserted respectively in at least one of two traction means, but preferably in both.

3. Transmission mechanism according to claim 1 or 2, **characterized in that** between the driving roller (01) and the driven roller (03), there are two traction means sections (05), wherein each of the traction means sections (05) is firmly attached on its ends to the driven roller (03) and/or the driving roller (01).

4. Transmission mechanism according to claim 1 or 2, **characterized in that** a rope-like traction means (05) runs between the driving roller (01) and the driven roller (03), which runs around the driven roller (03) and the ends of which are firmly attached to the driving roller (01).

5. Transmission mechanism according to one of claims 1 to 4, **characterized in that** one or several mechanically articulated driven members are coupled onto the driven roller (03) or onto the traction means.

6. Transmission mechanism according to one of claims 1 to 5, **characterized in that** the nonlinear load displacement curve of the spring coupling (07) can be varied with the help of adjusting means.

7. Transmission mechanism according to claim 6, **characterized in that** the pretension of the spring coupling is adjustable by means of a force that can be variably exerted.

8. Transmission mechanism according to one of claims 1 to 7, **characterized in that** the position oft he driving roller (01) and the driven roller (03) attached on the frame is reciprocally variable.

9. Transmission mechanism according to one of claims 1 to 8, **characterized in that** the driving roller (01) and/or the driven roller (03) are supported eccentrically on their respective rotation axis mounted on the frame.

10. Transmission mechanism according to one of claims 1 to 9, **characterized in that** the radius between the force application point, on which the tractions means (05) is attached, and the rotation axis of the driving roller (01) and/or the driven roller (03) is variable.

11. Transmission mechanism according to one of claims 1 to 10, **characterized in that** the traction means (05) itself does not consist of an elastic material.

## Revendications

1. Mécanisme de transmission pour un système d'entraînement d'un bras de robot agissant en deux directions avec au moins un moyen de traction (05) sous la forme d'un câble, lequel passe pour la transmission de force entre un rouleau d'entraînement (01) et un rouleau mené (03) et lequel comporte deux brins, avec un châssis portant le rouleau d'entraînement (01) et le rouleau mené (03) et avec un accouplement à ressort (07), qui est inséré dans un des deux brins et possède une caractéristique force-course non linéaire, **caractérisé en ce que**
- l'accouplement à ressort (07) comporte une précontrainte dans le brin de charge du moyen de traction en forme de câble (05), qui cause une force de tension minimale dans le brin vide dans tous les états de charge,
- l'accouplement à ressort (07) comporte un premier élément à ressort (13) avec une constante élastique invariable dans la plage de travail et un deuxième élément à ressort (15) avec une constante élastique augmentant avec une extension longitudinale croissante, les extrémités des deux éléments à ressort (13, 15) étant liées entre elles,
- le deuxième élément à ressort (15) est configuré de telle sorte qu'il pénètre dans une zone non élastique en atteignant une extension maximale prédéfinie avant de parvenir à une distension du premier élément à ressort (13),
- le moyen de traction en forme de câble (05) comporte un autre ressort de traction (11) avec une caractéristique force-course linéaire dans l'autre des deux brins de telle sorte que la caractéristique force-course non linéaire de l'accouplement à ressort n'est efficace que si le brin contenant l'accouplement à ressort (07) fonctionne comme brin de charge.

2. Mécanisme de transmission selon la revendication 1, **caractérisé en ce qu'**entre le rouleau d'entraînement (01) et le rouleau mené (03) passent deux moyens de traction fonctionnant de façon antagoniste (05) dans au moins un des deux moyens de traction, de préférence toutefois dans les deux, est respectivement inséré un accouplement à ressort (07) avec une caractéristique force-course non linéaire.

3. Mécanisme de transmission selon la revendication 1 ou 2, **caractérisé en ce qu'**entre le rouleau d'entraînement (01) et le rouleau mené (03) passent deux sections de moyen de traction (05), chacune des sections de moyen de traction (05) étant fermement reliée à ses extrémités au rouleau mené (01) ou au rouleau d'entraînement (03).

4. Mécanisme de transmission selon la revendication 1 ou 2, **caractérisé en ce qu'**entre le rouleau d'entraînement (01) et le rouleau mené (03) passe un moyen de traction en forme de câble (05), lequel passe autour du rouleau mené (03) et dont les extrémités sont fermement reliées au rouleau d'entraînement (01).

5. Mécanisme de transmission selon l'une quelconque des revendications 1 à 4, **caractérisé en ce qu'**un ou plusieurs éléments menés mécaniquement mobiles sont couplés au rouleau mené (03) ou au moyen de traction.

6. Mécanisme de transmission selon l'une quelconque des revendications 1 à 5, **caractérisé en ce que** la caractéristique force-course non linéaire de l'accouplement à ressort (07) peut être modifiée à l'aide de moyens de réglage.

7. Mécanisme de transmission selon la revendication 6, **caractérisé en ce que** la précontrainte de l'accouplement à ressort peut être réglée par une force de précontrainte variablement mémorisable.

8. Mécanisme de transmission selon l'une quelconque des revendications 1 à 7, **caractérisé en ce que** la position du rouleau d'entraînement (01) et du rouleau mené (03) montés sur le châssis peut être modifiée l'un par rapport à l'autre.

9. Mécanisme de transmission selon l'une quelconque des revendications 1 à 8, **caractérisé en ce que** le rouleau d'entraînement (01) et/ou le rouleau mené (03) sont logés de façon excentrique sur leur axe de rotation respectif fixé sur le châssis.

10. Mécanisme de transmission selon l'une quelconque des revendications 1 à 9, **caractérisé en ce que** le rayon situé entre le point d'articulation de la force où intervient le moyen de traction (05) et l'axe de rotation du rouleau d'entraînement (01) et/ou du rouleau mené (03) peut être modifié.

11. Mécanisme de transmission selon l'une quelconque des revendications 1 à 10, **caractérisé en ce que** le moyen de traction (05) est composé lui-même d'un matériau non élastique.
